# EUROPEAN PATENT APPLICATION

(11) **EP 1 480 253 A2**
(43) Date of publication of application: **24.11.2004**
(21) Application number: 03702660.6
(22) Date of filing: 30.01.2003
(51) Int. Cl.: H01L 21/00

(54) **METHOD OF DETERMINING FLUORIDE USING FUNCTIONALISED SILICON OXIDES**

(30) Priority: 31.01.2002 ES 200200307
(71) Applicant: UNIVERSIDAD POLITECNICA DE VALENCIA, 46022 Valencia (ES)
(72) Inventor: MARTINEZ MANEZ, Ramon, E-460022 Valencia (ES); SOTO CAMINO, Juan, E-46022 Valencia (ES); MARCOS MARTINEZ, Maria Dolores, E-46022 Valencia (ES); RODRIGUEZ LOPEZ, Gertrudis, E-46022 Valencia (ES); AMOROS DEL TORO, Pedro José, E-46022 Valencia (ES); JIMENEZ HUERTA, Diego, E-46022 Valencia (ES); DESCALZO LOPEZ, Ana Belén, E-46022 Valencia (ES); BELTRAN PORTER, Daniel, E-46022 Valencia (ES); EL HASKOURI, Jamal, E-46022 Valencia (ES)
(74) Representative: Ungria Lopez, Javier
(86) International application number: PCT/ES2003/000053
(87) International publication number: WO 2003/065408

(57) **Abstract**

Silicon oxides functionalised are prepared, being functionalised with organic molecules capable of providing a macroscopic signal when they pass to a solution, by means of the activation of the inorganic material surface, anchorage of the active molecule and removal of the non-anchored reagents. Once obtained the functionalised solid, the process for detecting the fluoride comprises the steps of: 1) suspending the solid in an acid buffered solution; 2) distribution of aliquots of the suspension and digestion; 3) optionally filtration and spectroscopic measurement on the solution, the materials used having the composition:

(SiO₂) _{1- x - y} [SiO_{(4 - n) / 2} (OH) ₙ] ₓ (SiO_{3 / 2}R) _{y} (I)

(SiO₂)_{1-x-y}(AₒOₐ)_{z/o}(M₂O)_{z'}[SiO_{(4-n)/2}(OH)ₙ]ₓ(SiO_{3/2}R)_{y} (II)

0<x<1, 0<y<1, 0<z<1, 0<z'<0.5, n=1, 2, A: metal of the groups (3-7)A, and (1-8)B, M: alkaline metal; R= organic molecule (macroscopic signal in solution); these materials can be obtained as dispersed powders of monoliths.

## Description

### Technical field

- Preparation of functionalised silicon oxide with active molecules.
- Preparation of functionalised mesoporous and/or macroporous silicon oxides with active molecules.
- Preparation of functionalised mixed mesoporous and/or macroporous oxides with active molecules.
- Preparation of functionalised synthetic zeolites with active organic molecules.
- Use of functionalised silicon oxide with active molecules as fluoride sensors and analysers.
- Use of functionalised mesoporous and/or macroporous silicon oxides with active molecules as fluoride sensors and analysers.
- Use of functionalised mixed mesoporous and/or macroporous oxides with active molecules as fluoride sensors and analysers
- Use of functionalised zeolites with active molecules as fluoride sensors and analysers.
- Detection and determination of fluoride using reactive chromogenics and/or fluorogenics.
- Detection and determination of fluoride using reactive chromogenics and/or fluorogenics anchored to silicon oxide.

### Prior art to the invention

Over the last few years a growing interest has been shown in studying and developing new chemical sensors for anions that can develop a microscopic optical signal. When detecting the anions in question, these spectroscopic sensors should respond by means of a variation in fluorescence (fluoroionophores) or by means of altering the absorbency (chromoionophores). 30 examples of fluorescent anion sensors are: D. H. Vance et al. *J. Am. Chem. Soc.,* 116 (1994) page 9397-9398; G. D. Santis et Al., *Angew. Chem. Int. Ed. Engl.,* 35 (1996) page 202; M. T. Albelda et al., *J. Chem*. *Soc*. *Perkin Trans.* 2 (1999) page 2545-2549; R. Prohens et al., *Chem*. *Commun.,* 2001 page 1456; M. E. Padilla-Tosta et al, *Eur*. *J. Inorg. Chem*., 2001 page 1221-1226; and of colorimetric anion sensors; S. Watanabe et al, *J*. *Am. Chem. Soc*., 120 (1998) page 229-230; K. Niikura et al., *J. Am. Chem*. *Soc.,* 120 (1998) page 8533-8534; J. J. Lavigne, E. V. Ansyln, *Angew. Chem. Int. Ed*. 38 (1999) page 3666-3669; P. Anzenbacher, Jr. et al., *Am. Chem*. *Soc.,* 122 (2000) page 10268-10272; F. Sancenón et al., *Angew. Chem. Int*. *Ed.,* 40 (2001) page 2640-2643. Among all of the sensors developed, those involving changes absorbency are of particular interest, as they allow for easy recognition of the presence of the anionic species in question, by means of a simple colour change. Different approaches have been taken to the design of different chemical sensors, and in most cases the process implies the coupling of one molecule which can bond with the anion(s) in question, to another molecule which generates the corresponding macroscopic signal, whether through fluorescence or a change of absorbency. In most cases, however, the optical signal can only be observed in nonaqueous solvents, such as chloroform or acetonitrile, and there are very few examples of chemical anion sensors which can operate in an aqueous environment. An alternative approach to this, based on recognition of anions, is carried out by causing specific reactions to the anions in question, conveniently coupled with a simultaneous process which gives off a detectable macroscopic signal.

In order to determine fluoride, detection processes have been developed based on the molecular recognition of the anion (P. A. Gale et al., *Chem. Commun*. 1999, page 1851; C. B. Black et al., *J*. *Am*. *Chem. Soc.,* 121 (1999) page 10438; H. Miyaji et al., *Angew. Chem. Int. Ed*., 39 (2000) page 1777) as well as based on displacing reactions (H. H. Willard et al., *Anal*. *Chem*. 22 (1950) page 1190; D. Revinson et al., *Anal. Chem.,* 25 (1953) page 794; S. Megregian, *Anal. Chem.* 26 (1954) page 1161; M. L. Nichols et al.; *Anal. Chem.* 26 (1954) page 703; J. L. Lambert, *Anal. Chem.* 26 (1954) page 558; J. Ramasamy et al., *Anal. Chem.* 51 (1979) page 558). The latter is the case of the process described by T. L. Daines et al. in J. Chem. Ed. 51 (1974) page 680, in which the fluoride anion reacts with a zirconian colorant, to form the compound (ZrF6)²⁻, which is colourless. In this way, the presence of fluoride in the environment is detected by a reduction of colouring in the solution. The main drawback with these methods, is that they can indicate not only a large volume of cations, but also of anions. Furthermore, one must take into account that a reduction in colour is always more difficult to detect than an increase in colour, and it would therefore be much more convenient to use a method based on appearance of colour.

Silica is a highly inert material when faced with most reactive chemicals. More specifically, when the silica is of high quality, it can only be attacked by concentrated alkalis and by the fluoride anion in an acid environment. Attacking silica in an acid environment is therefore a specific reaction to the fluoride anion, and may be used to detect the latter. With this approach, R. P. Curry et al., in Anal. Chem. 28 (1956) page 1567, established the analysis of fluoride based on this specific reaction, in order then to determine the concentration of the anion by distilling SiF4, which is collected in a beaker of borate/boric acid with pH = 8.5. This gives rise to the silicate anion, by means of hydrolysis, which is then finally used to provide a colour reaction in the presence of ammonium molybdate. As it is based on a specific reaction, this analysis obviously eliminates most interfering factors, but as it is so troublesome, it cannot compete with normal colour-based methods.

Among inorganic silicates used as host matrices for the purposes of fine chemistry, silica stands out for its high chemical and thermal stability. Furthermore, the ample availability of precursors, and the slow kinetics that most of them result in, mean that it is possible to obtain silicate matrices with very different macroscopic and microscopic characteristics. Silicates with a high specific surface are of particular interest, and among this group, materials known as MCM-41, which are porous solids, within the mesoporous range (2-50 nm), with a highly controlled pore size and topology. These materials are particularly notable due to the possibility of controlling their accessible surface characteristics and the morphology of particles and conglomerates forming the solids, by means of changing normal synthesis parameters (temperature, time, pH, etc.).

An enormous effort has been made by the scientific community to study these materials and to investigate their applications. Among the bibliographic sources related to this topic, it is worth noting the work in which the approach was to modify the silica matrix by anchoring organic molecules with specific functions to the surface. Example of this is X. Feng et al, who in Science 276 (1997), provided the synthesis of modified mesoporous silica with a single layer of propyl mercaptan, covalently bonded to the surface. The work of G. Wimsberger et al in *Chem. Com*. 2001 page 119, is also interesting, in which a description is made of the anchoring of fluorescent groups onto silica matrices. Furthermore, the work of H. S. Zou et al, in *Adv. Mater.* 11 (1999) page 683, and B. Lebeau et al, in *J. Mater. Chem.* 10 (2000) page 2105, which describes the anchoring of colorants, is also interesting. Of particular note also is the work of J. Ph. Soumillion et al in Tetrahedron Lett. 39 (1996) page 7039, which describes the use of a functionalised silica gel with aminomethylanthracen as a fluorescent pH indicator, while D. Wöhrle et al in Angew. Chem. Int. Ed 39 (2000) page 161, describe the anchoring of sulforhodamine B and an azoic colorant, by hydrothermal co-condensation with microwaves, although they do not disclose any application for the materials obtained. Due to the major interest that this topic has produced, many bibliographic reviews have been published dedicated exclusively to MCM-41 materials, in which the surface has been modified with organic molecules, such as K. Moller et al in Chem. Mater. 10 (1998) page 2950, or A. Stein in Adv. Mater. 12 (2000) page 1403.

Despite the large volume of work published on this topic, there is no example of materials sequenced in a panometric scale, applied to the determination of anions.

Based on these precedents, it seems promising to combine the specificity of the reaction between silica and the fluoride anion, with the chromophore and/or fluorophore properties of several organic molecules, which can be anchored to the surface of the silica matrices. By this method, we can reach a process which allows us to detect and analyse fluoride in waters, in a quick, sensitive and reproducible manner, which also eliminates the normal interferences.

### Object of this invention

Based on the aforementioned arguments, the object of this invention is to provide materials capable of detecting and/or analysing the presence of the fluoride anion in aqueous samples.

Another object of this invention is the synthesis of solid inorganic materials which, after being conveniently functionalised by the anchoring of organic systems, are capable of detecting the presence of anions.

Furthermore, this invention intends to examine the functionalisation of high accessibility porous oxides, such as silicates or silicon metalates, among others, using organic fluorogenic or chromogenic systems. Another object of this invention is to guarantee a high level of compound homogeneity in these solids, and a large level of functionalisation homogeneity.

Moreover, this invention will try to use solid inorganic functionalised materials for the detection and analysis of fluoride, by anchoring organic fluorogenic or chromogenic systems.

The invention also intends to use silicon oxides and/or functionalised silicon metalates for the detection and analysis of fluoride, by anchoring organic fluorogenic or chromogenic systems.

This invention also intends to use silicon oxides and/or porous silicon metalates of high accessibility, which have been functionalised using the anchoring of organic fluorogenic and/or chromogenic systems, for the detection and analysis of fluoride.

A final object of this invention is to determine the methodology used to apply the materials mentioned above for the detection and analysis of fluoride in water or in any other environment.

### Brief description of the invention

The process for obtaining the functionalised materials included in this invention, comprises two different steps. Firstly, obtaining the silica matrix, and secondly, functionalising the surface of the matrix with organic molecules capable of providing a macroscopic signal in solution.

The silica matrix is obtained by the synthesis process described in the publications and patent applications indicated as follows: S. Cabrera et al, in Solid State Sciences 2 (2000) page 405. J. E1 Haskouri et al, Chem. Com (in press), P. Amorós et al., patent application PCT/ES01/00122, P. Amorós et al, patent application PCT/ES01/02777. Later, functionalisation with organic molecules which give the macroscopic signal, is carried out by reaction of the silanols in the silica matrix with the different alcoxysilanes, which will be anchored to the surface of the silica using condensation. Once the silanol is anchored to the surface of the matrix, it is made to react conveniently with the carbonated chain, in order to achieve the organic function which will give rise to the production of a macroscopic signal.

The process for detecting fluoride in this invention, is based on the attack suffered by the silica when in contact with fluoride in an acid environment. In this way, as the fluoride dissolves the silica, the anchored molecule dissolves, giving rise to a spectroscopic event (usually colour and/or fluorescence), which indicates the presence of fluoride in the solution.

### Description of Figures

**Figure 1**
   Reaction chart for obtaining functionalised solids S1, S2 and S3
**Figure 2**
   X-ray diffraction spectrum (CuKo radiation) for the mesoporous silicon oxide UVM-7, functionalised with anthracen, and prepared using the concrete process described for example 1.
**Figure 3**
   SEM image of product of example 1 (the bar corresponds to 1µm)
**Figure 4**
   Nitrogen absorption-desorption isotherms (crosses and white circles, respectively) from the product of example 1.
**Figure 5**
   Graphic representation of the response from the solid obtained in example 1, when added to fluoride, following the process described in example 6 (calibration line).
**Figure 6**
   Graphic representation of the response from the solid obtained in example 4, when added to fluoride, following the process described in example 10 (calibration line).
**Figure 7**
   Graphic representation of the response from the solid obtained in example 5, when added to fluoride, following the process described in example 11 (calibration line).
**Figure 8**
   Spectroscopic response of solid S1, in solutions of increasing fluoride content, from zero (lowest part of the curve) to 1.0⁻³M (highest curve).
**Figure 9**
   Spectroscopic response of solid S2, in solutions of increasing fluoride content, from zero (lowest part of the curve) to 10⁻³M (highest curve).
**Figure 10**
   Spectroscopic response of solid S3, in solutions of increasing fluoride content, from zero (lowest part of the curve) to 10⁻³M (highest curve).

### Detailed Description of the invention

In one aspect, this invention relates to a functionalised material which comprises an inorganic matrix, corresponding to a mesoporous silica of the UVM-7, UVM-8, M-UVM-7 or M-UVM-8 type, functionalised with an organic compound capable of providing a macroscopic signal in solution, said matrix has the following formula (I) or (II) in its anhydrous form, regardless of whether it is powder of monolite:

(SiO₂)_{1-x-y}[SiO_{(4-n)/2}(OH)ₙ]ₓ(SiO_{3/2}R)_{y} (I)

(SiO₂)_{1-x-y} (AₒOₐ)_{z/o}(M₂O)_{z'}[SiO _{(4-n)/2}(OH)ₙ]ₓ(SiO_{3/2}R)_{y} (II)

wherein
"x", "y", "z" and "z'" represent molar fractions which define the empirical composition of the functionalised anhydrous material, and take real values as defined by the following conditions:
- x is a number greater than 0 and less than 1;
- y is a number greater than 0 and less than 1;
- z is a number greater than 0 and less than 0.5;
- z' is a number less than z/2;
"n" represents a whole number lower than four and higher than zero;
"A" represents a metal with valency of "p", selected from:
a metal belonging to group 3A, preferably B and Al;
a metal belonging to group 3B, preferably Sc, Y La and the lanthanids;
a metal belonging to group 4A, preferably Ge, Sn and Pb;
a metal belonging to group 5A, preferably P and B1;
a metal belonging to group 4B, preferably Ti and Zr;
a metal belonging to group 5B, preferably V;
a metal belonging to group 6B, preferably Mo;
a metal belonging to group 7B, preferably Mn;
a metal belonging to group 8B, preferably Fe, Co and Ni;
a metal belonging to group 1B, preferably Cu; and
a metal belonging to group 2B, preferably Zn.
"M" represents one or more monovalent elements, preferably Na;
"R" represents the rest of an organic molecule anchored to the silica matrix by means of a direct carbon-silicon bond; and
in formula (II), the sub-indexes "o" and "a" represent numbers of atoms by formula, which satisfy the relationship: o x p = 2 x a.

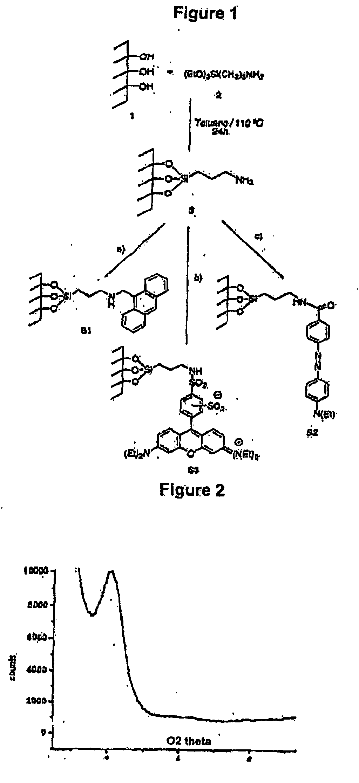

In one particular embodiment, the aforementioned functionalised material from formula (I) or (II), is a material chosen from the materials identified as S1, S2 or S3 (see examples 1-3 and Figure 1).

Besides their chemical composition, the functionalised materials of the compounds described above are characterised by the fact that the inorganic matrix corresponds to mesoporous silica UVM-7, UVM-8, M-UVM-7 or M-UVM-8. Therefore, the functionalised materials in question have, among others, the following distinctive characteristics:
- They show x-ray diffraction diagrams in which at least one peak corresponds to a lattice spacing value greater than 1.8mm;
- They have a particle morphology, according to the SEM images, made up of aggregates measuring between 10⁻⁶ and 10⁻⁵ m, which in turn are made up of micro and mesoporous particles of nanometric size (between 12 and 70 nm), between large mesoporous and macroporous particles;
- They have gradually blocked the small pore system, when the functionalisation is carried out with the organic compound which gives the signal;
- They keep the large pore system, which is made up of large mesopores and/or macropores, with an average diameter d_{BJH} of greater that 10 nm, typically between 20 and 100 nm;
- They have a pore structure and system inside each nanometric particle, with a hexagonal or disordered hexagonal symmetry, characteristic of MCM-41, HMS and MSU porous materials, which could be partially or totally sealed by the anchoring of active molecules;
- When the materials in question are obtained using the 'one pot synthesis' method, the rheological characteristics of the mesostructured/solution material suspension allow the production of functionalised material monolites either by extrusion or moulding;
- In functionalised materials, in the form of monolites, the organic species used as a base for the creation of mesopores, can be eliminated, leaving only the organic species which are anchored to the surface of the matrix, either by a washing process or by suitable calcination treatment; the characteristics indicated for the materials in powder form coincide with those for conformed or monolite solids; the conformation process does not change, and neither do any of the physical-chemical characteristics of these materials.
This invention, therefore, refers to a porous material which has a composition represented by formula (I) or (II), which is formed by an aggregate of microporous and mesoporous particles, welded in nanometric size, of between 12 and 70 nm, which creates a second large scale pore system, of between 20 and 100 nm, between large mesopores and macropores.

Additionally, the invention also refers to a monolite of a porous material having a composition represented by the formula (I) or (II), which has the textural and structural characteristics described above, namely that it is formed by the aggregation of microporous or mesoporous particles, welded, with a size of between 12 and 70 nm, which creates a second large scale pore system of between 20 and 100 nm, between large mesopores and macropores, which can be obtained by conventional moulding or extrusion techniques.

In another aspect, the invention also refers to a process to obtain the aforementioned functional material, comprising an inorganic matrix corresponding to the mesoporous silica of the type UVM-7, UVM-8, M-UVM-7 or M-UVM-8, functionalised with an organic compound which can produce a macroscopic signal in solution, which in anhydrous form, is represented by the aforementioned formula (I) or (II), which includes:
a) heating an inorganic matrix, corresponding to a mesoporous silica of the type UVM-7, UVM-8, M-UVM-7 or M-UVM-8, to a temperature between 100°C and 150°C, for a period of time between 12 hours and 3 days;
b) putting into contact:
   (i) a suspension of the aforementioned matrix resulting from step a), in an anhydrous organic solution, with
   (ii) an alcoxysilane, which contains an organic function capable of reacting with an organic compound, capable of providing a macroscopic signal in solution.
   under conditions capable of allowing said alcoxysilane to be anchored to said matrix;
c) making a reaction beween
   (i) the alcoxysilane anchored to the matrix, as produced by step b), with
   (ii) an organic compound capable of providing a macroscopic signal in solution.
   under conditions which allow for the reaction and anchoring of the organic compound indicated above to the aforementioned alcoxysilane; and
d) removing the excess of the organic compound capable of providing the macroscopic signal in solution, which has not been anchored by the alcoxysilane.

The process for obtaining the functionalised materials, as defined previously, comprises the functionalisation of some specific inorganic matrices, using a process which begins with the preparation and activation of the surface of the aforementioned inorganic material (the inorganic matrix which corresponds to a mesoporous silica UVM-7, UVM-8, M-UVM-7 or M-UVM-8), aimed to the production of the highest possible number of anchorage points for the subsequent functionalisation. Depending on the type of matrix chosen, the process can be more or less complex. Where matrices of the UVM-7 type are used, the preparation and activation of the surface involves a simple heating to between 100°C and 150°C for a period of no less than 12 hours and no more than 3 days. In the event that other inorganic matrices are used, the process of preparation and activation of the surface can further include digestion in acid solutions. The material used as inorganic matrix can be aggregated together in powder format or can be conformed as monolites.

Once the surface of the inorganic matrix has been prepared, the alcoxysilane is anchored. This involves using an organic function capable of reacting with an organic compound that can provide the macroscopic signal in solution. To do this, the activated surface of the inorganic matrix is suspended in an organic anhydrous solvent, to which the alcoxysilane is added to provide covalent bonding of the organic compound capable of producing the macroscopic signal (observable and/or measurable) in solution (active molecule), to the inorganic matrix. For example, when passing to the solution when the fluoride anion to be detected attacks the synthesised solid, under conditions which allow the aforementioned alcoxysilane to anchor to the matrix. In a particular embodiment, when preparing the materials identified as S1, S2 and S3 (Figure 1), toluene was used as the solvent (Examples 1-3) and the suspensions were prepared with a concentration of no less than 0.1g of inorganic matrix per 30 mL of toluene, and no greater than 10g of inorganic matrix per 30 mL of toluene. The alcoxysilane can be a trialcoxyaminosilane, typically 3-aminopropylethoxisylane, which is added in excess in order to achieve maximum functionalisation of the inorganic matrix. Any other trialcoxysilane can be used, as long as its carbonated chain contains a suitable organic function to react with an organic compound capable of producing a macroscopic signal in solution. This anchoring reaction of the alcoxysilane to the inorganic matrix, is carried out by heating and stirring, but while keeping a dry and inert atmosphere, in order to avoid oxidation or hydrolysis of the alcoxysilane to be anchored. The time needed to complete this step will depend on the type of inorganic matrix, and the chosen alcoxysilane. For the functionalisation of UVM-7 matrixes, more than 12 hours and less than 2 days is required.

Once the alcoxysilane has been anchored to the inorganic matrix, the anchorage of an active substance is carried out. For this purpose, the alcoxysilane which has been anchored to the matrix, is made to react with an organic compound capable of producing the macroscopic signal (observable and/or measurable) in solution. In one particular embodiment, when the functionalised material is identified as S1, S2 and S3 (Figure 1), the chosen alcoxysilane (3-aminopropylethoxisylane) contains a primary amine, the organic compound capable of producing a macroscopic signal in solution contains a group susceptible to the nucleophilic attack by said amine, such as an aldehyde, acid or acid chloride. The anchoring reaction conditions will depend on the solubility and reactivity characteristics of the organic compound capable of providing the macroscopic signal in solution. In one particular embodiment, the organic compound capable to provide the macroscopic signal in solution is 9-anthraldehyde, 4-(4-[(dimethylamine)phenyl]diazenyl) benzoic acid or sulforhodamine B chloride.
Next, the excess of the organic compound capable of providing the macroscopic signal in solution is removed, which has not been anchored to the alcoxysilane. It is important to remove any traces of the reactive which has not been covalently anchored to the inorganic matrix, because when using the corresponding functionalised material (solid) in the fluoride analysis process, which is an additional objective of this invention, a false signal increase could be given due to a simple bleaching of the active reactive excess, which is not related to the fluoride anion. The solids (matrix functionalised with alcoxysilanes and active substances) can be washed using conventional methods, for example by extraction with an organic dissolvent, in which the organic compound used to produce the macroscopic signal will dissolve. In one particular embodiment, the washing is carried out by extraction in Soxhlet, with an organic solvent in which the active molecule is soluble, typically ethanol, for a period of time sufficient to ensure the complete removal of the non-anchored reactive material.

In another aspect, the invention refers to a process to functionalise a silica or silicometalate, with a compound capable of producing a macroscopic signal in solution, which comprises:
a) putting into contact:
   (i) a suspension of a silica matrix or silicometalate in an anhydrous organic solvent, with
   (ii) an alcoxysilane which includes an organic function capable of reacting with the organic compound capable to provide the macroscopic signal in solution;
   under conditions which allow the alcoxysilane to anchor to the matrix; and
b) to make a reaction between:
   (i) The alcoxysilane anchored to the silica matrix or silicometalate obtained from step a), with
   (ii) an organic compound capable of providing a macroscopic signal in solution.

The explanation above regarding the alcoxysilane and the organic compound capable of providing a macroscopic signal in solution, as well as the anchoring of this to the silica or silicometalate matrix, is applicable to the functionalisation process indicated previously, with appropriate modifications depending on the nature of the matrix and the reactants (alcoxysilanes and active substance).

In another aspect, the invention refers to a process to obtain a silica or silicometalate, functionalised using the synthesis process described as the "atranes" (described in patent application PCT/ES01/00122 and P200102777, by P. Amorós et al), which comprises:
- previously obtaining the alcoxysilane functionalised with the corresponding active molecule; and
- the addition of the functionalised alcoxysilane to the reaction, together with the atranes and simultaneous hydrolysis with said compounds.

Another aspect of the invention refers to a process to determine fluoride. The determination of fluoride is carried out in aqueous solutions buffered at acid pH, in order to ensure the quantitative formation of fluorhydric acid. A mixture of water with solvents such as alcohols, ethers, acetonitriles, or any other organic solvent miscible with water can be used as a means of producing a reaction for the determination of fluoride, said mixture being suitable for the sample to be analysed and to keep the organic compound capable of providing the macroscopic signal in solution.

Consequently, the invention provides a process for analysing the fluoride anion in an aqueous environment, based on the specific attack experienced by the silica in the presence of the fluoride anion in an acid environment, which comprises:
- the use of a porous or non-porous silica or silicometalate matrix, with a high surface area, functionalised with an organic compound which can produce a macroscopic signal which is observable and/or measurable in solution;
- the attack by the fluoride anion on the aforementioned functionalised silica or silicometalate matrix, in an acid environment, which leads to the release of the organic compound to the solution, said compound capable of producing a macroscopic signal which is observable and/or measurable in a state of solution; and
- the appearance of an observable and/or measurable macroscopic event which indicates the presence of the fluoride anion in solution;

This invention, therefore, provides a process to analyse the fluoride anion in an aqueous environment, based on the specific attack suffered by the silica in the presence of the fluoride anion in an acid environment, which comprises the following steps:
a) preparing a suspension of porous or non-porous silica or silicometalate matrix, with a high surface area, functionalised with an organic compound which can produce an observable and/or measurable macroscopic signal in solution, in an acid pH buffer;
b) distributing aliquots of the suspension prepared in step a), to prepare the standard solutions that constitute the distinct calibration points and samples;
c) adding the standard solutions and samples to the aliquots of the suspension prepared in step b), and letting the fluoride anion to attack said silica or silicometalate matrix, which has been functionalised to cause the solution of the organic compound capable of providing an observable and/or measurable macroscopic signal in solution, for as long as necessary to obtain a constant response.
d) separating the silica or silicometalate matrix in suspension; and
e) measuring the observable and/or measurable macroscopic signal from the free solutions of the silica or silicometalate matrix, constructing the calibration line and calculating the concentration of samples by interpolation on the calibration line.

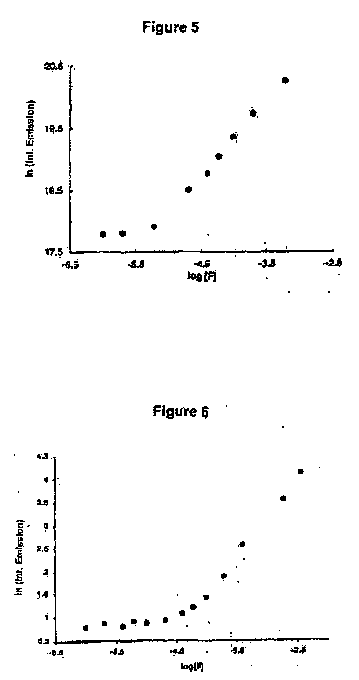

More specifically, in order to determine the fluoride present in an aqueous or aqueous-alcohol environment, a suspension of the functionalised material is prepared (S1, S2, S3 or any other silica or silicometalate conveniently functionalised) in the acid buffer, in such a way as to make the suspension contain no less than 0.1 mg of functionalised material per mL in the buffer, and no more than 10 mg of functionalised material per mL in the buffer. Aliquots of this suspension are then dropped in by pipette to prepare the standard solutions, which correspond to the distinctive calibration points and samples. All aliquots and samples are prepared in non-siliceous tubes, in order to avoid any possible interferences caused by the use of glass, and these can optionally be sealed in order to avoid evaporation of the solvent and to minimise deviations in concentration. The standard solutions and samples are kept under thermostat in a water bath at 25°C, and are stirred by magnetic action, for example, for as long as is needed to obtain a constant response (until an increase in stirring time does not result in a significant increase in the fluoride detection limit), generally no less than 10 minutes and no more than 2 hours (typically one hour). The solid from the resulting suspensions (namely, the functionalised material which has lost all or part of the organic compound capable of producing an observable and/or measurable macroscopic signal, when it is in solution, as a consequence of the fluoride attack on the functionalised material) is separated by conventional methods of solid/liquid separation, for example by filtering, centrifugal action and decanting or any other suitable method. The solutions obtained are then directly entered into the measurement cell, and the response is obtained by the method used (fluorometric or colorimetric), leading to an increase in the signal, as the concentration of fluoride increases, and a linear response is obtained for the neperian logarithm for absorbency or fluorescence vs. the logarithm for fluoride concentration, as shown in Figures 5, 6 and 7.

The methodology proposed in this invention, to detect fluoride, is based on a perfect coupling of the characteristics of the inorganic matrix and the compound providing the anion detection signal. In one embodiment, the inorganic matrix chosen, was a silica from the MCM-41 family. This matrix was chosen for its large specific surface (approximately 1,000 m²/g) which allowed the maximum level of anchoring for the detector compound molecules (the organic compound capable of producing an observable and/or measurable signal in solution). Particularly, the use of UVM-7 silica as described in the patent application P200102777, by P. Amorós et al, as a siliceous matrix to anchor the active species, has the additional advantage of having a bimodal pore system. This is, the inorganic matrix UVM-7 is structured in the form of mesoporous particles, which bond together to form micrometric aggregates, giving rise to the formation of a second system of pores which ranges from large mesopores to macropores. Although the matrix functionalisation process results in a sealing of the ordered mesopore system, which characterises MCM-41 solids (among which the UVM-7 are to be found), the second system of pores, which remains open, allows the species to be detected to have greater access to the functionalised particles, and therefore provides a quicker and more reliable response regarding the presence of fluoride in the environment. The control of the synthesis conditions, as described in the detailed description of the invention, allows the use of smooth conditions during the fluoride determination process, in order to allow detection to take place, ensuring the quantitative formation of PH, at room temperature and in medium acid pH.

Another important point is to ensure the proportional nature of the response of the solid to the concentration of fluoride. In order to do this, the method described in this invention for the functionalisation of the inorganic matrix, allows for organic compounds providing the observable and/or measurable macroscopic signal to be anchored when they are in solution, by means of covalent bonding instead of using simple absorption, which would allow a response of the functionalised material by simple washing, and not by an attack by the fluoride anion on the silica. The process to determine fluoride, as described by this invention, can be implemented in a quick measurement unit, including a mechanic device allowing the functionalised silica or silicometalate matrix to be attacked by the fluoride in the problem solution, and allowing for the calculation of its concentration by comparison with a standard concentration. In one embodiment, the mechanical device used to implement the fluoride determination process, in this invention, involves strips or bands for analytic tests.

Another aspect of this invention refers to the use of a functionalised material or porous material, or a monolite of a porous material, created as a result of this invention into the analysis of fluoride in an aqueous environment, in accordance with the process of determining fluoride laid out in this invention.

Furthermore, this invention refers to the use of a non-porous silica, functionalised with an organic compound capable of providing a macroscopic signal in solution, for the analysis of fluoride in an aqueous environment, in accordance with the fluoride determination process laid out in this invention.

Another aspect of this invention refers to the use of a porous silica, such as a porous silica selected from the group of silica identified as MCM-41, HMS, MSU-n, MSU-V, FSM-16, KSW-2, SBA-n (n = 1, 2, 3, 8, 11-16), UVM-m (m = 7, 8) and M-UVM-m (m = 7, 8) functionalised with an organic compound capable of providing a macroscopic signal in solution, for the analysis of fluoride in an aqueous environment, in accordance with the fluoride determination process laid out in this invention.

### Examples

### Example 1. Silicon oxide with a bimodal porous system, functionalised with anthracen, S1 (Figure 1).

The UVM-7 silica matrix (silicon oxide with a bimodal porous system obtained in accordance with patent application P200102777, by P. Amorós et al) is dried in a hothouse at 110°C, to eliminate the water absorbed, and is then suspended in anhydrous toluene (typically 1 g of solid / 30 mL of toluene) and 3-aminopropyltriethoxisylane is added in excess, in order to favour maximum functionalisation of the material (0.013 mol/g solid) under an inert argon atmosphere. This is then heated to 110°C and is stirred constantly for a day. The product obtained from this process is then filtered and washed with dichloromethane and ethanol to eliminate the excess of reactive materials which did not condense with the silanol groups (SiOH) on the solid walls and this is then left to dry in a hothouse at 70°C for a few hours.

A suspension of this solid is then prepared in pure ethanol (1 g/30 ml EtOH) and then 0.5 g of 9-anthraldehyde is added, and heated at 45°C for one day. NaBH₄ is added to this mixture in excess, in order to reduce the imine formed and this is then stirred at room temperature for 10-12 hours. The product of this is then filtered and washed with HCl 10⁻² M, in order to neutralise the NaBH₄, and then with distilled water of pH = 5-6.

The solid obtained from this process is kept by extraction in a Soxhlet with ethanol, for 1-2 days in order to ensure that any traces of fluorophore absorbed on the surface have been removed. The final material produces an x-ray diffractogram (Figure 2) with a peak at an angle corresponding to 35Å, which is characteristic of disordered MCM-41 materials. Figure 3 contains a SEM image which is representative of this solid, and which shows the nanometric particles which characterise this material. Figure 4 shows an absorption/desorption curve which is typical of this material, and in which the peak at high pressures shows the presence of a textural macroporous nature.

### Example 2: Silicon oxide with bimodal pore system, functionalised with azoic dye, S2 (Figure 1).

The UVM-7 silica matrix (silicon oxide with a bimodal pore system, obtained in accordance with the patent application P200102777, by P. Amorós et al), is dried in a hothouse at 110°C in order to eliminate the water absorbed, and is then suspended in anhydrous toluene (typically 1 g solid/30 mL toluene), and 3-aminopropyltriethoxisylane is added in excess, in order to favour maximum functionalisation of the material (0.013 mol/g solid) under an inert argon atmosphere. This is then heated to 110°C and is stirred constantly for a day. The product obtained from this process is then filtered and washed with dichloromethane and ethanol to eliminate the excess of reactive materials which did not condense with the silanol groups (SiOH) on the solid walls and this is then left to dry in a hothouse at 70°C for a few hours.

In a matrix under an argon atmosphere, 320 mg of the previous solid is weighed together with 485 mg of the 4-(4-[(dimethylamine)phenyl]diazenyl) benzoic acid, and 20mL of distilled dichloromethane is added, along with a spatula of p-toluensulfonic acid. This is kept in an ice bath, to which cyclohexylcarbodiimide (DCC) is added, dissolved in 5 mL of dichloromethane. After 2:30 hours, it is left being stirred at room temperature for a further 4 hours. It is then filtered, and the solid is washed with ethanol and dichloromethane.

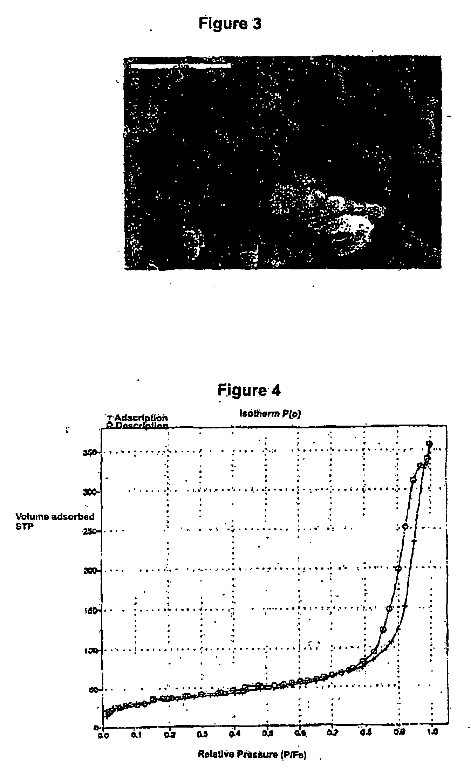

The solid that is obtained, is then extracted in a Soxhlet, with ethanol, for 1-2 days, in order to ensure that the traces of colorant/fluorophore absorbed on the surface has been removed. This material shows an x-ray diffractogram, microstructure and porosity similar to that of the solid from example 1 (Figures 2, 3 and 4).

### Example 3. Silicon oxide with a bimodal pore system, functionalised with sulforhodamine, S3 (Figure 1)

The UVM-7 silica matrix (silicon oxide with a bimodal pore system, obtained in accordance with the patent application P200102777, by P. Amorós et al), is dried in a hothouse at 110°C in order to eliminate the water absorbed, and is then suspended in anhydrous toluene (typically 1 g solid/30 mL toluene), and 3-aminopropyltrietoxisylane is added in excess, in order to achieve maximum functionalisation of the material (0.013 mol/g solid) under an inert argon atmosphere. This is then heated to 110°C and is stirred constantly for a day. The product obtained from this process is then filtered and washed with dichloromethane and ethanol to eliminate the excess of reactive materials which did not condense with the silanol groups (SiOH) on the solid walls and this is then left to dry in a hothouse at 70°C for a few hours.

A suspension of this solid is then prepared, in recently distilled dichloromethane (1 g/20 mL CH2CI2) in an ice bath, to which 320 mg of sulforhodamine B chloride, dissolved in 10 mL of distilled dichloromethane, is added using an addition funnel (drop by drop for about twenty minutes) under an argon atmosphere. This is left to be stirred for 24 hours at room temperature, and is then filtered and washed with ethanol and dichloromethane.

The solid that is obtained, is kept in extraction in a Soxhlet with ethanol for 1-2 days, to ensure the elimination of any traces of colorant absorbed on the surface, This material shows an x-ray diffractogram, microstructure and porosity similar to those of example 1 (Figures 2, 3 and 4).

### Example 4: Commercial silicon oxide with high surface area functionalised with anthracen.

The commercial silica matrix with high surface area (controlled particle size) is dried in a hothouse at 110°C for two days, to eliminate the water absorbed, and then is suspended in anhydrous toluene (typically 1 g solid/30 mL toluene), to which 3-aminopropyltrietoxisylane is added in excess, to encourage maximum functionalisation of the material (0.013 mol/g solid) under an inert argon atmosphere. This is heated to 110°C, and is stirred for one day. The product obtained from this process is filtered and washed with dichloromethane and ethanol to eliminate excess of reactive material which has not condensed with the silanol groups (SiOH) on the wall of the solid, and is left to dry in the hothouse at 70°C for a few hours.

A suspension of this solid is then prepared in pure ethanol (1 g/30 ml EtOH) and then 0.5 g of 9-anthraldehyde is added, and heated at 45°C for one day. NaBH₄ is added to this mixture in excess, in order to reduce the imine formed and this is then stirred at room temperature for 10-12 hours. The product of this is then filtered and washed with HCI 10⁻² M, in order to neutralise the NaBH₄, and then with distilled water of pH = 5-6.

The solid obtained from this process is kept by extraction in a Soxhlet with ethanol, for 1-2 days in order to ensure that any traces of fluorophore absorbed on the surface have been removed.

### Example 5. Mesoporous silicon oxide functionalised with anthracen

The MCM-41 silica matrix is dried in a hothouse at 110°C for 36 hours, to eliminate the water absorbed, and is then suspended in anhydrous toluene (typically 1 g solid/30 mL toluene) to which 3-aminopropyltrietoxisylane is added in excess, to achieve maximum functionalisation of the material (0.013 mol/g solid) under an inert argon atmosphere. This is heated to 110°C, and is stirred for one day. The product obtained from this process is filtered and washed with dichloromethane and ethanol to eliminate excess of reactive material which has not condensed with the silanol groups (SiOH) on the wall of the solid, and is left to dry in the hothouse at 70°C for a few hours.

A suspension of this solid is then prepared in pure ethanol (1 g/30 ml EtOH) and then 0.5 g of 9-anthraldehyde is added, and heated at 45°C for one day. NaBH4 is added to this mixture in excess, in order to reduce the imine formed and this is then stirred at room temperature for 10-12 hours. The product of this is then filtered and washed with HCl 10⁻² M, in order to neutralise the NaBH4, and then with distilled water of pH = 5-6.

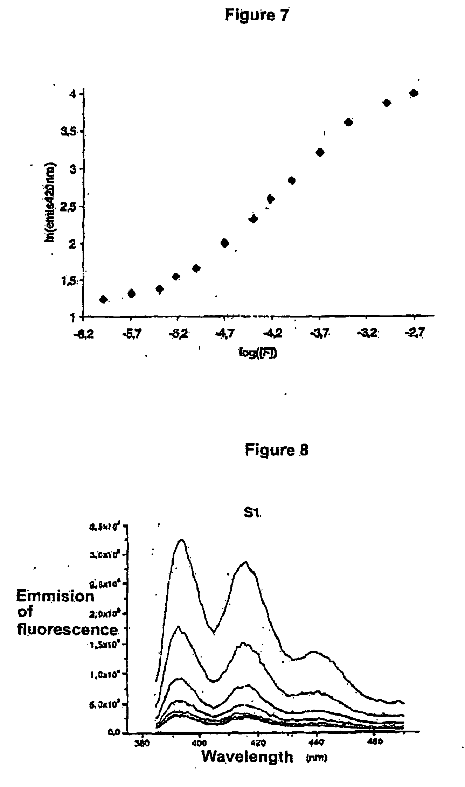

The solid obtained from this process is kept by extraction in a Soxhlet with ethanol, for 1-2 days in order to ensure that any traces of fluorophore absorbed on the surface have been removed. Figure 8 shows a SEM (Scanning Electron Microscopy) photo of this material.

### Example 6. Determination of fluoride by means of fluorometry using solid S1

A suspension is prepared of solid S1, prepared in accordance with example 1, adding 1 mg of the solid in question to each mL of a beaker of potassic hydrogenophtalate /phtalic acid 0.1 M at pH = 2.5. With this suspension, samples of 10mL of fluoride are prepared, from a standard solution of sodium fluoride (Aldrich), using the following concentrations:
0.5 x 10⁻⁷, 10⁻⁶, 2x10⁻⁶, 4x10⁻⁶, 6x10⁻⁶, 10⁻⁵, 2x10⁻⁵, 4x10⁻⁵, 6x10⁻⁵, 10⁻⁴, 2x10⁻⁴, 4x10⁻⁴, 10⁻³, 2x10⁻³, and 4x10⁻³ M.

These are introduced to a polypropylene tube, with a stirring magnet. All tubes are hermetically sealed, and placed in a bath of water with a thermostat set to 25°C. They are stirred for 1 hour. At the end of this period, all suspensions are filtered with the help of a funnel, using a nylon filter to eliminate the traces of solids. These solutions are then placed in a quartz dish to measure fluorescence, with the following parameters:
λ _{Excitation} = 370nm
λ _{Emission} = 420nm

The response obtained by different concentrations of the fluoride anion are shown in Figure 8.

Finally, the neperian logarithm for the emission of fluorescence is obtained, for the different samples at 420 nm vs the decimal logarithm for the concentration of fluoride, thereby obtaining a linear response (Figure 5).

### Example 7. Determination of fluoride by means of fluorometry using the solid S3

The same process is followed as for S1, in example 6, except that in this case the parameters to obtain the emission spectrum are as follows:
λ _{Excitation} = 566nm
λ _{Emission} = 586nm

The spectroscopic response for the different concentrations of the fluoride standard are shown in Figure 10. This finally represents the neperian logarithm for the emission of fluorescence obtained from the different samples at 586 nm vs the decimal logarithm for the concentration of fluoride, thereby obtaining a linear response.

### Example 8. Determination of fluoride by means of colorimetry, using solid S2

The same process is used as described in example 6. The solutions obtained in this manner are put into a UV-visible quartz dish, and the spectrum of absorbency is measured in a range of 200 to 800 nm.
λ max. Absorbency = 460 nm

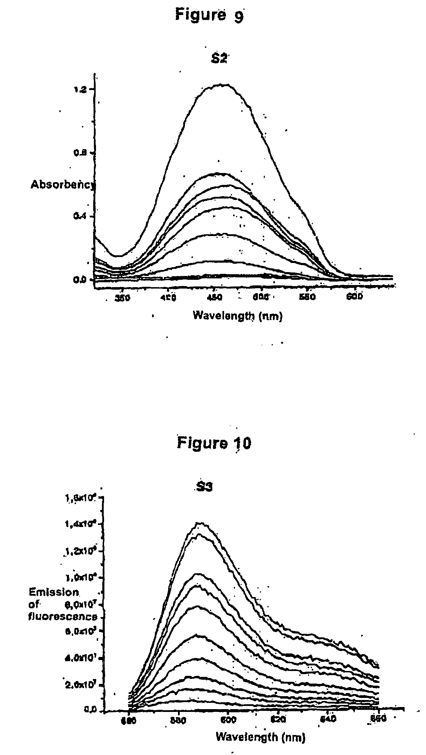

The response obtained for the different concentrations of standard solution, are demonstrated in Figure 9. This finally represents the neperian logarithm for absorption at 460 nm for the different samples vs the decimal logarithm for fluoride concentration, thereby obtaining a linear response.

### Example 9. Determination of fluoride by means of colorimetry, using solid S3

The same process is followed as for example 6. The solutions obtained from this process are placed in a UV-visible quartz dish, and the absorbency spectrum is measured in a range from 200 to 800 nm.
λ _{max.} Absorbency = 566 nm

This finally represents the neperian logarithm for absorption at 566 nm for the different samples vs the decimal logarithm for fluoride concentration, thereby obtaining a linear response.

### Example 10. Determination of fluoride by means of fluorometry, using a commercial silica functionalised with anthracen.

The same process is followed as for S1, in example 6. The parameters used to obtain the emission spectrum were as follows:
λ _{Excitation} = 370nm
λ _{Emission} = 420nm

This finally represents the neperian logarithm for fluorescence at 420 nm for the different samples vs the decimal logarithm for fluoride concentration, thereby obtaining a linear response (Figure 6).

### Example 11. Determination of fluoride by means of fluorometry, using a mesoporous silica MCM-41.

The same process is followed as described S1 in example 6. The parameters used to obtain the emission spectrum are as follows:
λ _{Excitation} = 370nm
λ _{Emission} = 420nm

This finally represents the neperian logarithm for fluorescence at 420 nm for the different samples vs the decimal logarithm for fluoride concentration, thereby obtaining a linear response (Figure 7).

## Claims

1. A functionalised material, comprising an inorganic matrix of a mesoporous silica UVM-7, UVM-8, M-UVM-7 or M-UVM-8, functionalised with an organic compound capable of giving out a macroscopic signal in solution, in its anhydrous form, is represented by the following formulae (I) or (II) :
(SiO₂)_{1-x-y} [SiO _{(4 - n) / 2}(OR) ₙ] ₓ (SiO_{3 / 2}R) _{y} (I)
(SiO₂)_{1-x-y} (AₒOₐ)_{z/o}(M₂O)_{z}[SiO _{(4-n)/2}(OH)ₙ]ₓ(SiO_{3/2}R)_{y} (II)
where
"x", "y", "z" and "z'" represent molar fractions which define the empirical composition of the functionalised anhydrous material, and assume real values as defined by the following conditions:
- x is a number greater than 0 and less than 1;
- y is a number greater than 0 and less than 1;
- z is a number greater than 0 and less than 0.5;
- z' is a number less than z/2;
"n" represents a whole number lower than four and higher than zero;
"A" represents a metal with valency of "p", selected from:
a metal belonging to group 3A, preferably B and A1;
a metal belonging to group 3B, preferably Sc, Y La and the lanthanids;
a metal belonging to group 4A, preferably Ge, Sn and Pb;
a metal belonging to group 5B, preferably P and B1;
a metal belonging to group 4B, preferably Ti and Zr;
a metal belonging to group 5B, preferably V;
a metal belonging to group 6B, preferably Mo;
a metal belonging to group 7B, preferably Mn;
a metal belonging to group 8B, preferably Fe, Co and Ni;
a metal belonging to group 1B, preferably Cu; and
a metal belonging to group 2B, preferably Zn.
"M" represents one or more monovalent elements, preferably Na;
"R" represents the rest of an organic molecule anchored to the silica matrix by means of a direct carbon-silicon bond; and
in formula (II), the sub-indexes "o" and "a" represent numbers of atoms by formula, which satisfy the relationship: o x p = 2 x a.

2. A porous material made up of a composition that matches claim 1, and which is formed by a aggregate of welded microporous or mesoporous particles, sized between 12 and 70 nm, generating a second porous system sized between 20 and 100 mm, comprising large mesoporous and macroporous.

3. A monolite of a porous material in accordance with claim 2, obtainable by moulding or extrusion.

4. A process to obtain a functionalised material in accordance with claim 1. comprising the following processes:
a) heating an inorganic matrix corresponding to a mesoporous silica UVM-7, UVM-8, M-UVM-7 and M-UVM-8, at a temperature of between 100°C and 150°C for between 12 hours and 3 days;
b) bringing together
(i) a suspension of the matrix resulting from step a) in an anhydrous organic solvent, with
(ii) an alcoxysilane comprising an organic function capable of reacting with an organic compound which results in a macroscopic signal in solution
under conditions which allow the anchoring of the alcoxysilane to this matrix;
c) causing a reaction between
(i) the alcoxysilane anchored to the matrix as obtained in step b), with
(ii) an organic compound which results in a macroscopic signal in solution
under conditions which allow the reaction and anchoring of this organic compound with the aforementioned alcoxysilane; and
d) withdrawing the excess organic compound which results in a macroscopic signal in solution, that has not been anchored by the alcoxysilane.

5. A process in accordance with claim 4, in which the aforementioned alcoxysilane is a trialcoxyaminosilane .

6. A process in accordance with claim 5, in which the aforementioned trialcoxyaminosilane is 3-aminopropylethoxysilane.

7. A process in accordance with claim 4, in which step b) is performed in an inert and dry atmosphere.

8. A process in accordance with claim 4, in which the organic solvent used to suspend the matrix resulting from step b), is toluene.

9. A process in accordance with claim 4, in which the matrix suspension resulting from step a) in an organic anhydrous solvent, is a suspension of this matrix in toluene, using a concentration of between 0.1 and 10 g of matrix per 30 ml of toluene

10. A process in accordance with claim 4, in which the matrix suspension resulting from step a) in an organic anhydrous solvent, with the alcoxysilane which can react with an organic compound capable of resulting in a macroscopic signal in solution, are placed together for a time period between 12 hours and 2 days.

11. A process in accordance with claim 4, in which the mentioned organic compound capable of resulting in a macroscopic signal in solution, is 9-anthraldehyde, benzoic acid 4-[4-[(dimethylamine)phenyl]diazenyl] or sulforhodamine B chloride.

12. A process in accordance with claim 4, in which the excess of organic compound which results in a macroscopic signal in solution, that has not been anchored by the alcoxysilane, is removed by extraction, using an organic solvent in which the aforementioned organic compound, capable of resulting in a macroscopic signal in solution, is soluble.

13. A process in accordance with claim 12, in which the excess of organic compound which results in a macroscopic signal in solution that has not been anchored by the alcoxysilane is removed by extraction using ethanol.

14. A process to functionalise a silica or a silicon metalate with a compound capable of resulting in a macroscopic signal in solution, comprising the following processes:
a) bringing together
(i) a silica or silicon metalate matrix suspension in a anhydrous organic solvent, with
(ii) an alcoxysilane, which comprises an organic function that reacts with an organic compound capable of resulting in a macroscopic signal in solution;
under conditions which allow the anchorage of this alcoxysilane to the mentioned matrix; and
b) causing a reaction
(i) between the alcoxysilane anchored to the silica or silicon metalate matrix obtained in step a) with
(ii) an organic compound capable of resulting in a macroscopic signal in solution

15. A process to obtain a functionalised silica or a silicon metalate using the synthesis process known as atranes, which comprises:
- previously obtaining the functionalised alcoxysilane with the corresponding active molecule; and
- adding the functionalised alcoxysilane to the reaction, together with the atranes and simultaneous hydrolysis with the aforementioned compounds.

16. A process to analyse the fluoride anion in an aqueous environment, based on the specific attack suffered by the silica in the presence of the fluoride anion in an acid environment, which comprises:
- the use of a porous or non-porous silica or silicon metalate matrix, of a high surface area, functionalised with an organic compound capable of resulting in an observable and/or measurable macroscopic signal in solution.
- the attack by the fluoride anion on the functionalised silica or silicon metalate matrix, in an acid environment, issues a solution of the mentioned organic compound capable of resulting in an observable and/or measurable macroscopic signal in solution; and
- the appearance of an observable and / or measurable macroscopic event which shows the presence of the fluoride anion in the solution.

17. A process to analyse the fluoride anion in an aqueous environment, based in the specific attack suffered by the silica in the presence of the fluoride anion in an acid environment, which comprises the following steps:
(a) preparing a porous or non-porous silica or silicon metalate matrix suspension, of a high surface area, functionalised with an organic compound capable of resulting in an observable and/or measurable macroscopic signal in solution, in a beaker of acid pH;
(b) distribute portions of the suspension prepared in step a) to prepare the standard solutions which will be used for the various calibration points and the samples;
(c) add the pattern solutions and the samples to the suspension portions prepared in step b) and allow the fluoride anion to attack the mentioned functionalised silica or silicon metalate matrix, to produce the issuing of an organic compound capable of resulting in an observable and/or measurable macroscopic signal in solution, for as long as necessary to obtain a constant response;
(d) separate the suspension of the silica or silicon metalate matrix; and
(e) measure the observable and/or measurable macroscopic signal of the free silica or silicon metalate matrix solutions, build the calibration line and calculating the concentration of samples by interpolating the calibration line.

18. A process in accordance with claim 17, in which the aforementioned standard solutions and samples are prepared in tubes of non-siliceous material, which can be hermetically sealed if required.

19. A process in accordance with claim 17, in which the aforementioned standard solutions and samples are kept in water with a thermostat at 25°C, and are stirred for a time period long enough to obtain a constant response.

20. A process in accordance with claim 17, in which the separation of the aforementioned silica or silicon metalate matrix suspension is performed by sieving, centrifugal action or decanting.

21. A process in accordance with claim 17, implemented by a fast action team, comprising a mechanical device which allows the attack of the functionalised silica or silicon metalate matrix by the fluoride in the problem solution, and the calculation of its concentration by comparison with a concentration pattern.

22. A process in accordance with claim 21, in which the mentioned mechanical device provides bands for analytical experiments.

23. The use of a functionalised material in accordance with claim 1, or of a porous material in accordance with claim 2, or of a monolite of porous material in accordance with claim 3, to analyse fluoride in an aqueous environment, following the method described in any of the claims 16 to 22.

24. The use of a functionalised non-porous silica in an organic compound capable of resulting in a macroscopic signal when it is dissolved, for the analysis of fluoride in an aqueous environment, in accordance with the method described in any of the claims 16 to 22.

25. The use of a functionalised porous silica in an organic compound capable of resulting in a macroscopic signal when it is dissolved, for the analysis of fluoride in an aqueous environment, in accordance with the method described in any of the claims 16 to 22

26. The use, in accordance with claim 25, of a porous silica selected among the silica identified as MCM-41, HMS, MSU-V, FSM-16, KSW-2, SBA-n (n=1,2,3,8,11-16), ,UVM-m (m=7,8) and M-UVM-m (m=7,8), functionalised with an organic compound capable of resulting in a macroscopic signal in solution, for the analysis of fluoride in an aqueous environment, in accordance with the method described in any of the claims 16 to 22.
